# EUROPEAN PATENT SPECIFICATION

(11) **EP 0 379 970 B1**
(45) Date of publication and mention of the grant of the patent: **08.12.1999**
(21) Application number: 90100987.8
(22) Date of filing: 18.01.1990
(51) Int. Cl.: F21V 17/02, F21P 5/02

(54) **Compact variable diffuser for use in a luminaire**
Kompakter, veränderlicher Diffusor für Projektor
Diffuseur compact variable pour projecteur

(30) Priority: 23.01.1989 US 300500
(43) Date of publication of application: 01.08.1990
(73) Proprietor: VARI-LITE, INC.(a Delaware corporation), Dallas Texas 75247 (US)
(72) Inventor: Bornhorst, James M., De Soto, Texas 75115 (US)
(74) Representative: UEXKÜLL & STOLBERG

(56) References cited:
- EP-A- 0 208 569
- DE-C- 386 799
- DE-U- 8 810 217
- GB-A- 2 063 447
- US-A- 4 843 529

## Description

### TECHNICAL FIELD OF THE INVENTION

The present invention relates in general to luminaires or performance lighting instruments, and more particularly to methods and apparatus for diffusing the light emanating from such apparatus.

### BACKGROUND OF THE INVENTION

Luminaires have long been used in the entertainment area and other fields to produce dramatic lighting effects on a subject matter. In the theatrical field, many types of luminaires are utilized to provide a variety of effects on the actors, musicians, scenery, etc. For example, spot luminaires are employed to produce a bright and intense beam of light with a finely defined peripheral edge. Wash luminaries are utilized to produce a soft and ill-defined beam of light for flooding a general area, such as the background of a stage. Literally hundreds of such lights are utilized in large performances, such as rock concerts. U.S. Patent 4,392,187 illustrates a highly sophisticated and computerized lighting system well adapted for providing many types of lighting effects.

The trend in developing high performance luminaires is toward microprocessor controlled units having motorized apparatus for altering the properties of the light. Such units include lenses, color changers, dowsers, dimmers, diffusers, as well as power supplies and mechanical apparatus for providing pan and tilt orientations to the luminaire. Owing to the number of components required to produce the various lighting effects, the size and weight of sophisticated luminaires tends to increase. The apparatus for altering the properties of a light beam often include mechanisms for inserting and removing glass panels from the path of the light to create the desired effect. For example, colored panels, such as those disclosed in the patent noted above, as well as in U.S. Patent 4,037,097, are used with step-motors for rotating the color panels in a beam of light to change the hue and saturation properties of the light. Also shown in U.S. Patent 4,392,187, are individual panels which can be pivotally mounted to operate as shutters within the path of the light to thereby produce a desired color. In addition, such panels have been constructed of a textured glass to produce a diffused light beam.

In the stage performance field, it is also required to often produce a diffuse light beam, such as by the noted wash luminaires to illuminate a broad area. A Fresnel luminaire can product such an effect, using lenses with highly textured surfaces to produce the diffuse light. However, the amount of diffusion of the light is difficult to adjust and is usually provided by manual adjustable apparatus. It can be appreciated that such a manual adjustment is often difficult, especially when such a lamp is mounted to an overhead truss frame. Also, other types of light diffusing apparatus are available, but either requires a substantial amount of space in the luminaire housing, is heavy and bulky, or remains within the path of light even if deactivated, or is degraded over time by the light beam. Techniques often used in the art involve the hinging or swinging of a light altering panel of glass into the path of light, and then out of the path when not used. This approach is effective to produce the intended purpose, but requires substantial space to allow the full arcuate swing of the panel.

The color-changing mechanism shown in U.S. Patent No. 4,602,321 has been used effectively in the VL3 wash luminaire made by Vari-Lite, Inc. of Dallas, Texas, and has been adapted to carry panels of textured, translucent glass which pivot within the path of a light beam and thereby diffuse the beam. It has been discovered by experience that the variable diffuser utilizing pivotable glass panels works best only at the two extremes of travel: fully open or fully closed. This is due to several factors, one of which is that only one type of glass is used in all three panels, yielding three diffuse blobs growing within a field of intense light as the panels are rotated. White light escaping between the partially rotated panels, while quite effective in reducing saturation of a colored beam in a color changer, creates a noticeable pattern of light when used in a pivoting glass diffuser. Once the panels are rotated far enough to completely overlap the entire beam, the diffusion effect almost reaches its maximum level. Further rotation produces only minimal additional diffusion.

EP-A-0 208 569 discloses a variable light diffuser comprising the features of the preambles of claims 1 or 10, respectively. It also discloses a system for producing diffused light comprising the features of the preamble of claim 5. Furthermore, the said reference discloses a system comprising the features of the preamble of claim 8. However, this prior art document does not teach or suggest a panel having varying degrees of light diffusivity such that the panel has a low degree of light diffusivity at a leading portion thereof and a higher degree of light diffusivity on a trailing part thereof.

It can be seen from the foregoing that a need exists for an improved light altering mechanism which is lightweight, requires little space, and which can be moved entirely out of the path of the beam of light. A further need exists for a mechanism which can be employed in luminaires for moving light altering panels to varying locations within the path of the light to achieve a desired effect, and then move such panels entirely from the light path, into an area in the housing which is normally not used.

### SUMMARY OF THE INVENTION

The invention relates to a variable light diffuser comprising the features of claims 1, 5, 8 or 10, respectively.

### BRIEF DESCRIPTION OF THE DRAWINGS

Further features and advantages will become apparent from the following and more particular description of the preferred and other embodiments of the invention, as illustrated in the accompanying drawings in which like reference characters generally refer to the same parts or elements throughout the views, and in which:
FIGURE 1 is an isometric view of a luminaire embodying the tambour panel of the invention;
FIGURE 2 is an isometric view of the panel track mechanism according to the invention;
FIGURE 3 is an isometric view of one panel of the tambour type diffuser of the invention;
FIGURE 3a illustrates the double diffusion of light through the overlapping tambour panels;
FIGURES 4 and 5 illustrate the details of the linked chain for attachment of the panel sections together;
FIGURE 6 is a frontal sectional view of a luminaire illustrating the tambour panels in an overlapped position in the path of the light beam; and
FIGURE 7 illustrates the track and drive apparatus of the panel moving mechanism of the invention.

### DETAILED DESCRIPTION OF THE INVENTION

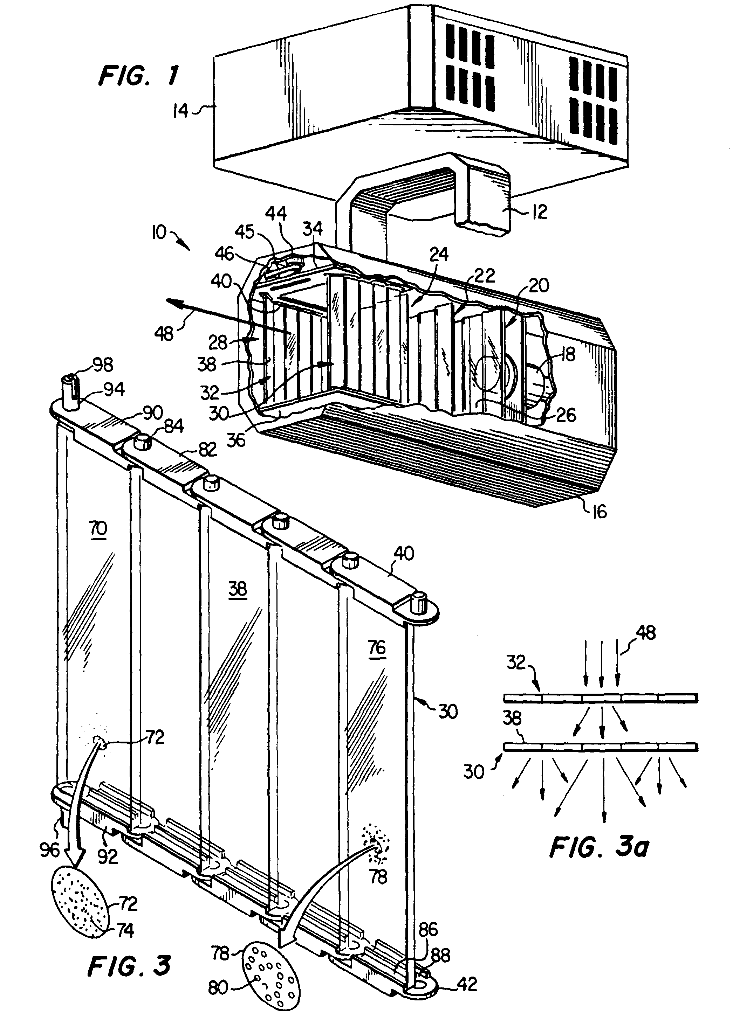

While there exists many applications for the invention, FIGURE 1 illustrates one application in which the invention may be advantageously practiced. Shown is a luminaire 10 pivotally fixed about a vertical axis by a hollow yoked member 12 to a base 14. The yoked member 12 is pivotally fixed about a horizontal axis to a housing 16, the overall arrangement providing pan and tilt movements of the luminaire 10 with respect to the base 14. The construction of the housing of the luminaire 10 is disclosed in more detail in U.S. Patent 4,701,833 assigned to Vari-Lite, Inc. Typical applications of the luminaire require the base 14 to be fixed to a truss or frame structure (not shown) which is elevated above the stage or area in which the performance is to be conducted.

The housing 16 of the luminaire 10 includes a number of components which produce the varied lighting effects. In addition, and not shown, the housing 16 may include circuit boards, motor controls, and a high wattage lamp 18 functioning as the source of light. A color generation assembly, including a first color section 20, and a second color section 22, and a third color section 24 is employed, each having a number of dichroic filters, such as 26. Each dichroic color section includes three dichroic filters which are rotatable in unison to provide a band pass of different colors. The color generation assembly is described in more detail in U.S. Patent No. 4,602,321, assigned to Vari-Lite, Inc., Dallas, Texas. A typical luminaire 10 may include many other components not shown for reasons of clarity.

The luminaire 10 constructed according to the preferred embodiment of the invention includes a variable light diffuser 28 constructed to occupy space not normally used by other components within the housing 16. The variable diffuser 28 can be moved from a position on the sides of the housing 16 to a position within the path of light generated by the lamp 18. The variable diffuser 28 according to the invention includes a first tambour-type diffusing panel 30 and a second similar diffusing panel 32, each movably mounted between a top track 34 and a bottom track 36. The tracks 34 and 36 are fixed internally to the housing 16, and preferably, although not of necessity, in the frontal part of the housing 16.

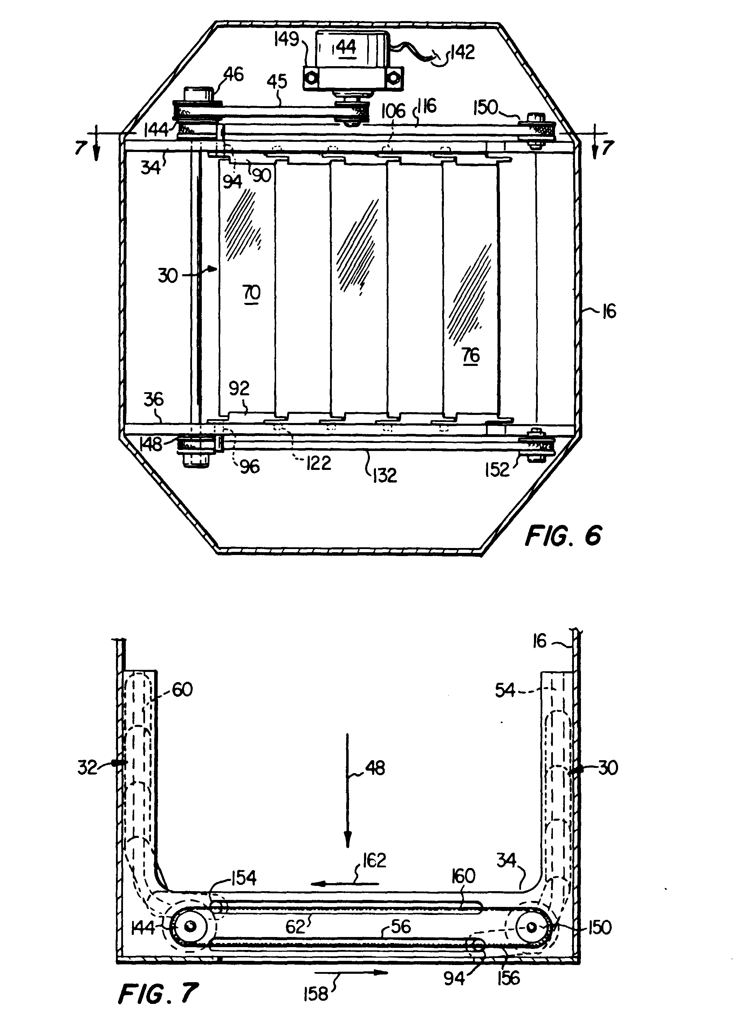

Each diffusing panel 30 and 32 includes a number of individual sections, such as 38, each being fixed to an upper chain link 40 (FIGURE 3) and a lower link 42 to form respective drive chains adapted for moving within the top and bottom tracks 34 and 36. Further provided is a motor 44, preferably of the stepper type, connected by a belt 45 (FIGURE 6) to a reduction pulley 46, and therethrough to the linked upper and lower drive chains. With this construction, each diffusing panel 30 and 32 can be moved by the motor 44 along the tracks to positions on opposing sides of the housing 16 to completely remove the diffusing elements out of the path of the light beam, or "light path", as indicated by arrow 48.

When it is desired to diffuse the light emitted from the lamp 18, the motor 44 is energized, or stepped, whereby both diffusing panels 30 and 32 move along the tracks 34 and 36 and into the light path 48. The light is thereby diffused to an extent by which the diffusing panels 30 and 32 are moved into the light path 48. Those skilled in the art will appreciate that as the leading edge of each diffusing panel 30 and 32 begins to move into the light path 48, the light becomes diffused.
As the diffusing panels 30 and 32 are moved completely into the light path 48, in a frontal edge to frontal edge relationship, the light path is entirely intercepted by the diffusing panels 30 and 32 so that full light diffusion occurs. However, in accordance with an important feature of the invention, the track system, including upper track 34 and lower track 36, permits the diffusing panels 30 and 32 to be moved into a fully overlapping position in the light path 48 so that the light must pass through both diffusing panels 30 and 32, thereby providing greater diffusion of the light.

When the diffusing panels are moved to an overlapping relationship, such as shown in FIGURE 3a, a double dispersion of the light is achieved. In other words, when the light 48 generated by the lamp 18 strikes the first diffusing panel 32, it is diffused into a number of dispersed rays. Each such ray then strikes a second diffusing panel 30, wherein each ray is again dispersed. A double dispersing effect is achieved, whereby a greater degree of light dispersion or diffusion of the light beam can be realized.

In accordance with another feature of the invention, each diffusing section 38 for each of the panels 30 and 32 can be constructed to diffuse light in a different amount as the light passes therethrough. For example, the diffusing sections 38 arranged near the leading edge of each diffusing panel 30 and 32 can be finely textured so as to diffuse the light to a lesser degree than other adjacent sections. Those diffusing sections 38 located near the trailing edge of each diffusing panel 30 and 32 can be constructed with more coarse texturing to thereby provide maximum diffusion of the light passing therethrough. In providing a continuum of diffusion capabilities, the diffusing sections 38 intermediate the leading and trailing edges of each such panel 30 and 32 can be constructed with intermediate degrees of texturing to thereby provide an intermediate degree of light diffusion.

Those skilled in the art can readily appreciate that the type of light diffusing material, and the degree of diffusion thereof, can be varied to suit particular needs. In the preferred form of the invention, the diffusing sections 38 are constructed of glass having surface coatings or textures selected to provide diffusion properties ranging from mild to heavy. Moreover, the invention is not limited to that noted above, but rather the diffusing panels 30 and 32 can be constructed of a flexible plastic so that each such panel can be moved around the corners of the track system without a need for individual tambour sections.

With reference now to FIGURE 2, there are illustrated the details of the variable light diffuser of the invention, with the motorized drive mechanism removed for purposes of clarity. The lower track 36 includes a groove 50 adapted for engaging with the lower drive chain 52 for guiding the lower edge of the diffusing panel 30 from a position fully within the light path 48, as shown, to a position parallel to the side of the luminaire housing 16. The top track 34 includes a similar groove 54 for guiding the upper part of the diffusing panel 30 between similar positions. The groove 50 in the bottom track 36 and the groove 54 in the top track 34 are formed entirely through such tracks in the frontal areas of the tracks.

Each such track 34 and 36 includes a second pair or grooves 58 and 60 formed in a manner similar to those of grooves 50 and 54. Again, the grooves 58 and 60 are formed entirely through the frontal sections of the respective tracks. The purpose of the groove sections formed entirely through the tracks 34 and 36 will be described in detail below.

Each diffusing panel section 38 is fixed in a tambour manner with respect to each other by the respective linked chains so as to be movable around the respective corners of the upper and lower tracks 34 and 36. The diffusing sections 38 of the panel 30 are each connected to a respective lower and upper link, such as links 64 and 66, each link being connected together to a corresponding lower and upper drive chain. While the tambour panels are described herein as being moveable in a track system from opposing side locations, the invention can also be employed for movement from opposing upper and lower locations.

The tambour-type diffusing panel of the invention is more clearly shown in FIGURE 3. In the preferred form of the invention, the diffusing sections 38 are constructed with glass which is surface textured to an amount by which it is desired to diffuse the light passing therethrough. As noted above, each section 38 has a different texturing formed on a face surface thereof to diffuse the light in a different amount. Preferably, the leading diffusing section 70 includes a fine texturing 72, also shown as an enlargement thereof. The texturing includes a large number of small surface irregularities 74 such as scratches, dimples or bumps, an etched surface, or other fine texturing formed during the construction of the diffusing section 70. The trailing edge glass diffusing section 76 is characterized by having a coarse texturing 78, also shown by the enlarged view. The coarse texturing can be formed by a smaller number of densely arranged large irregularities 80, such as large dimples or protrusions formed during the construction of the glass diffusing section 76. The diffusing sections located intermediate the leading section 70 and the trailing section 76 are selected with texturing which is intermediate that of the noted sections. In this manner, the amount by which the light is diffused depends upon the amount by which the diffusing panel 32 is moved within the path 48 of the light. While those skilled in the art may find that one such movable panel 32 provides adequate light diffusing capabilities, another similar panel can be employed and moved in overlapping positions to produce yet additional diffusing capabilities.

Each diffusing section 38 is mounted at its upper end thereof to a link 40, and at its lower end thereof to a similar link 42. The links 40 and 42 are joined to other similar links to form respective drive chains which cooperate with the track system to move the diffusing panel 30 from a side location within the housing 16, around a corner, and in a frontal position in the path 48 of the light.

Each chain link is joined to a neighboring link, such as 82 by a pin 84 which allows pivotal movement of one link with respect to the other. In addition, the diffusing section 38 of each panel 30 is mounted to respective upper and lower links by a room temperature vulcanizer (RTV) compound or other similar adhesive material. As noted by the construction of link 42 in FIGURE 3, there are provided parallel, side-by-side, channels 86 and 88 in which the diffusing sections are fixed. A pair of channels 86 and 88 are provided so that a single link construction can be employed for both the bottom and top links of each drive chain. When used as a bottom link 42, the diffusing section 76 would be adhered in the frontal channel 86. If used as a top link, such link would be reversed, whereby the diffusing section would be adhered to channel 88 which would then be the frontal channel in the top link. Importantly, the diffusing sections 38 are mounted in the frontal channels of the respective upper and lower chain links to increase the radius of curvature as the tambour arrangement of panel sections is moved around the corner of the respective upper and lower tracks 34 and 36.

The links 90 and 92 to which the leading panel section 70 is mounted each include a drive pin 94 and 96 having respective slots 98 for engaging respective cog drive belts (not shown in FIGURE 3). In this manner, the movement of the drive cog belts by the stepper motor is effective to move the panel 30 along the grooves 54 and 50 of the respective upper and lower tracks 34 and 36.

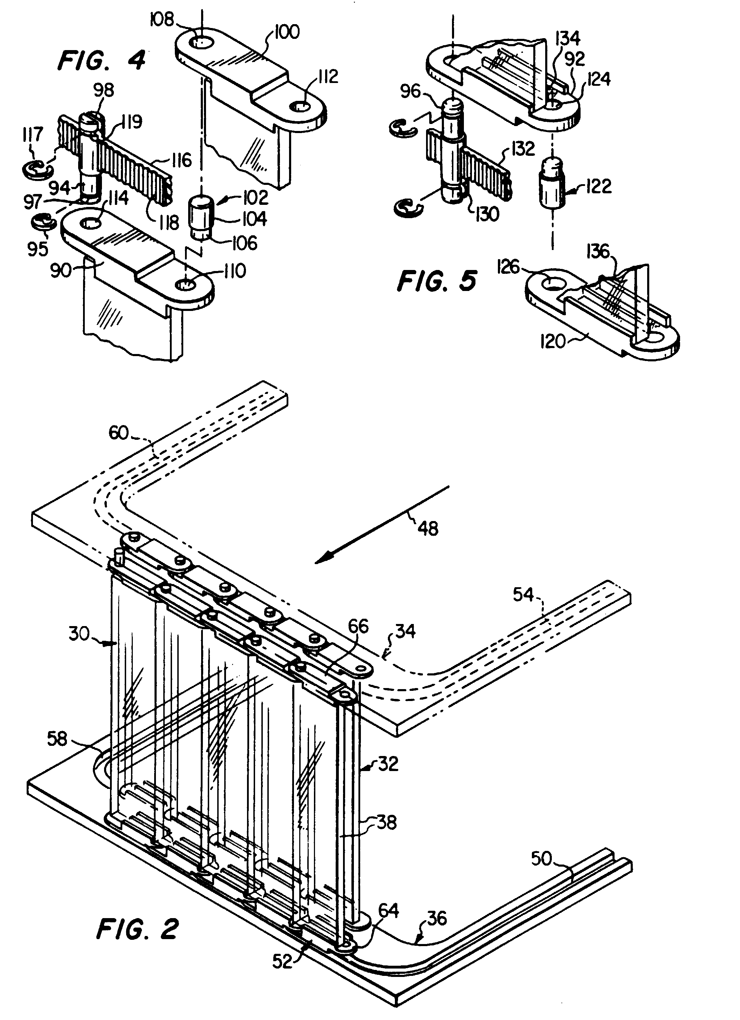

FIGURE 4 illustrates two links 90 and 100 forming a portion of the top linked chain, with associated connecting apparatus removed for purposes of clarity. Links 90 and 100 are pivotally fastened to each other by a pin 102 having a larger diameter section 104 and a smaller diameter section 106. The smaller diameter section 106 of pin 102 fits tightly within a hole 110 formed within the link 90. The larger diameter section 104 fits loosely within a hole 108 of the link 100. The top end part of the larger diameter section 104 protrudes through the hole 108 and above the link 100 to provide an end thereof which fits within the groove 54 of the upper track 34. Pivotal movement of the link 90 with respect to the link 100 is occasioned by the larger diameter section 104 rotating within the hole 108 of link 100. It should be noted that for each link, the hole 108 on one and thereof is larger than the hole 112 on the opposing end.

On the end links, such as the leading edge link 90, the drive pin 94 fits tightly within the hole 114 and is secured with an e-clip 95 snapped into an annular groove 97 formed in one end of the drive pin 94. A larger portion of the pin 94 extends upwardly beyond the link 90 and through the track groove formed entirely through a frontal part of the top track 34. On the top side of the track 34, a cogged belt 116 is engaged within the slot 98 of the pin 94. The cogged belt 116 is flat on one side thereof, and has cogs or corrugations 118 on the other side. The slot 98 of the drive pin 94 is similarly constructed, with a flat side and an opposing corrugated side for engaging the corresponding surfaces of the belt 116. With this construction, the belt 116 can be slid into the slot 98 of the drive pin 94 to fix the parts together and prevent slipping. The cogged belt 116 is further fixed within the slot 98 of the pin 94 by an e-clip 117 snapped into an annular groove 119 of the pin 94. When the belt 116 is moved laterally by a drive mechanism, the drive pin 94 and attached link 90 are carried with the belt 116. The various parts of the top linked chain, including the links 90, 100 and the connecting pins 102 and drive pin 94, are constructed of plastic and dimensioned to achieve the various functions noted above.

FIGURE 5 illustrates the construction of the bottom linked chain. As noted, the bottom links are constructed identical to the top links described above. Bottom link 92 is connected to link 120 by a stepped pin 122 which fits tightly in a hole 124 within link 92, but is rotatable within the larger hole 126 of link 120. A bottom drive pin 96 is fixed within hole 128 of link 92, and has a slotted end 130 for fixing a bottom cogged belt 132 thereto. Thus, lateral movement of the cog belt 132 is effective to move the bottom links of the bottom linked chain. As further noted in FIGURE 5, the bottom surfaces of the channels of each link have ridges or grooves 134 which aid in adhesively securing the diffusing sections 136 therein. Both channels of each link, including the top and bottom links of each chain are similarly constructed to provide a high quality bonding of each diffusing section with the channels of the corresponding top and bottom links.

FIGURE 6 illustrates a frontal elevation view of the tambour diffuser of the invention. While not shown, the upper track 34 and lower track 36 are fixed to the housing 16 at the side edges thereof with conventional hardware, such as screws and/or angle brackets. The diffusing panel 30 is shown moved completely into the path of the light, with the other diffusing panel 32 located behind the panel 30. The motor 44 is driven via electrical conductors 142 to move the frontal diffusing panel 30 to the right and along the right-hand side of the housing 16, and to move the other diffusing panel 32 to the left and along the left-hand side of the housing 16. The motor 44 is connected by a cogged belt 45 to a reduction pulley 46. A cogged drive pulley 144 associated with the reduction pulley 46 is fixed by a drive rod 146 to a lower drive pulley 148. The drive pulleys 144 and 148 are journaled for rotation within the respective upper track 34 and lower track 36. The motor 44 is fixed with respect to the upper track 34 by bracket 149. The upper cogged pulley 144 is connected by the cog belt 116 to a cogged idler pulley 150. In like manner, the lower drive pulley 148 is connected by the cogged belt 132 to a lower idler cogged pulley 152. Idler pulleys 150 and 152 are rotatably mounted with respect to the upper track 34 and lower track 36. With this arrangement, when the motor 44 is activated or stepped, the belts 116 and 132 move accordingly. Importantly, a frontal length of each belt 116 and 132 moves to the right, as shown in FIGURE 6, while a back portion of the belts moves to the left. With the drive pins 94 and 96 of one diffusing panel 30 connected to the frontal length of the belts 116 and 132, and with the drive pins (not shown) of the other diffusing panel 32 connected to the back portion of each belt 116 and 132, the rotation of the motor 44 causes the diffusing panels 30 and 32 to move in opposing directions.

A clearer understanding of the movement of the diffusing panels 30 and 32 in the track system can be obtained from FIGURE 7. Here, the diffusing panels 30 and 32 are shown in a retracted position along the opposing sides of the luminaire housing 16. When retracted to such positions by the motor 44, the upper drive pin 94 of panel 30 is in the right-hand end of through slot 56 of the upper track 34, while the top drive pin 154 associated with diffusing panel 32 is at the left end of through slot 62. The pins 154 and 94 are thus captured for movement within the through slots 62 and 56 of the upper track 34. Corresponding panel pins are similarly captured in respective through slots in the lower track 36. The noted positions of the pins were occasioned by the counterclockwise rotation of the motor 44, when viewed from above, after frontal belt portion 156 of upper belt 116 has moved in the direction of arrow 158, and rear belt portion 160 has moved in the direction of arrow 162. As can be appreciated, the diffusing panels 30 and 32 are moved into the light path 48 by stepping or rotating the motor 44 in a clockwise direction so that the upper drive pin 154 of panel 32 moves toward the right-hand end of through slot 62 and the upper drive pin 94 associated with panel 30 moves toward the left-hand end of through slot 56. The lower drive pins (not shown in FIGURE 7) are carried by the lower pulleys 148 and 152 and drive belt 132 to ensure equal motion of the upper and lower linked chains and keep the diffuser panels 30 and 32 vertical and parallel, thereby preventing binding of the mechanism.

While the foregoing describes the invention in terms of panel sections having light diffusing properties, such sections can be constructed to alter the light to accentuate or achieve other characteristics. For example, the panel sections can be constructed or coated with a color filtering material to produce a desired color of the light beam. Those skilled in the art will find that the panels of the invention can be fitted with sections which are adapted to alter the light beam in various other manners to achieve a desired effect on the light beam.

From the foregoing, disclosed is a tambour-type diffusing arrangement which is highly effective to diffuse light from varying degrees of very little diffusion at all, to a maximum diffusion. Absolutely no diffusion of the light occurs when the diffusing panels are drawn to the sides of the housing, as absolutely no diffusing structure remains in the path of the light. Maximum diffusion occurs when the diffusing panels are moved in the path of the light in a side-by-side or overlapping position. Light must then pass through both panels which produces a maximum diffusing effect. In addition, varying degrees of light diffusion can be achieved by constructing each of the diffusing panel sections to diffuse the light by a different amount. The track system of the tambour diffusing mechanism is U-shaped to require minimal space within a luminaire housing. A technical advantage of the invention is that each diffusing panel comprising multiple diffusing sections can be moved along the U-shaped track from retracted positions to positions where maximum light diffusion is accomplished. Other luminaire apparatus can be mounted generally within the inner area of the diffusion assembly track system, thereby maximizing the utilization of space within the luminaire.

## Claims

1. A variable light diffuser (28), comprising:
a diffusing panel (30) constructed of a transparent material so that the intensity of the light passing therethrough is not substantially reduced; and
a mechanism (34, 36, 40, 42, 44, 45, 46) for moving said panel (30) to desired positions in front of a light source (18) to change the amount by which the light is diffused without substantially changing the light intensity;
**characterized** by said panel (30) having varying degrees of light diffusivity at different areas thereon such that said panel (30) has a low degree of light diffusivity on a leading portion (70) thereof which is a first position of the panel (30) to enter the light path when moved, and a higher degree of light diffusivity on a respective trailing part (76) of said panel (30), and intermediate degrees of diffusivity therebetween.

2. The variable light diffuser (28) of claim 1, wherein said diffusing panel (30) is constructed of a number of individual light diffusing sections (38) wherein certain of said sections (38) diffuse light passing therethrough with different degrees of diffusion.

3. The variable light diffuser (28) of claim 1, further comprising a second diffusing panel (32) constructed of a transparent material and having varying degrees of light diffusivity at different areas thereon such that said second panel (32) has a low degree of light diffusivity on a leading portion (70) thereof which is a first portion of the second panel (32) to enter the light path when moved, and a higer degree of light diffusivity on a respective trailing part (76) of said second panel (32) and intermediate degrees of diffusivity therebetween, each of said diffusing panels (30, 32) being movable toward each other in front of the light, wherein each of said panels (30, 32) is adapted to move together in a substantially overlapping manner in the path (48) of said light so that double light diffusion can be achieved.

4. The variable light diffuser (28) of claim 3, **characterized** in that when said panels (30, 32) are moved in fully overlapping positions, areas of low diffusivity of one panel (30, 32) are aligned in a light path with areas of high diffusivity of the other panel (30, 32).

5. A system for producing diffused light to a desired degree, comprising:
a housing (16) for mounting therein a lamp (18) which produces a light beam directed along a light path (48), said housing (16) having an opening through which the light beam exits said housing (16); and
a pair of light altering panels (30, 32) constructed of a transparent material so that the intensity of the light passing therethrough is not substantially reduced, said panels (30, 32) being mounted for movement from opposing side locations within said housing (16) toward the frontal part of said housing (16) to intermediate positions in said light path (48) to thereby diffuse the light to an extent by which said panels are moved in said light path (48);
**characterized** in that said panels (30, 32) are movable to final fully overlapping positions where the light passes through one panel and then through the other panel (30, 32); and in that
each of said panels has a low degree of light diffusivity on a leading portion (70) thereof which is a first portion of the panel (30, 32) to enter the light path (48) when moved, and a higher degree of light diffusivity on a respective trailing part (76) of said panel (30, 32), and intermediate degrees of diffusivity therebetween.

6. The light system of claim 5, wherein each said panel (30, 32) comprises a number of individual sections (38) mounted together in an edge-to-edge manner so as to be movable between said side positions and said final positions wherein certain of said sections (38) diffuse light passing therethrough with different degrees of diffusion.

7. The light system of claim 5, wherein each said portion (38) of each said panel(30, 32) diffuses light to a different degree, and said portions (38) of each panel (30, 32) are arranged so that when moved into overlapping positions, the light which passes through both said panels (30, 32) is diffused in a uniform manner.

8. A method for diffusing light, comprising the steps of:
moving in unison a pair of transparent light-diffusing panels (30, 32) between respective initial positions out of a light path (48) along a panel path (34, 36) into respective final overlapping positions in the light path (48) to achieve a desired degree of light diffusion without substantially reducing the intensity of the light;
moving each said panel (30, 32) along said panel path (34, 36) so that a frontal edge of each said light-diffusing panel (30, 32) moves toward each other and is spaced apart on opposing sides of the light beam to achieve an intermediate degree of light diffusion;
**characterized** by moving each panel (30, 32) into progressively more overlapping positions in the beam to achieve a progressively greater degree of diffusion of the light such that double diffusion of the light is obtained; and in that
said panels (30, 32) have a low degree of diffusivity on a leading edge (70) thereof and have a high degree of diffusivity on a trailing edge (76) thereof.

9. The method of claim 8, further including the step of moving each said panel (30, 32) where each panel (30, 32) comprises a plurality of individual sections (38) mounted together in an edge-to-edge manner, the sections of each panel have a different degree of diffusion to said light.

10. A variable light diffuser (28), comprising:
at least two diffusing panels (30, 32) constructed of a transparent material so that the intensity of light passing therethrough is not substantially reduced; and
a mechanism (34, 36, 40, 42, 44, 45, 46) for moving each said panel (30, 32) toward each other in a coordinated manner to any of a plurality of desired positions in front of a light source (18) to change the amount by which the light from said source (18) is diffused as a function of a spacing between a leading edge (70) of each said panel (30, 32);
**characterized** by each said panel (30, 32) being constructed with material producing a low degree of diffusivity on a leading edge (70) thereof and producing a high degree of diffusivity cn a trailing edge (76) thereof; and in that
said panels (30, 32) are adapted to also move together in substantially overlapping manner in a path (48) of said light so that double light diffusion can be achieved.

## Patentansprüche

1. Variabler Licht-Diffusor (28), mit:
einer aus einem transparenten Material hergestellten Zerstreuungsplatte (30), wobei die Intensität des dadurch hindurchtretenden Lichts nicht wesentlich vermindert wird; und
einem Mechanismus (34, 36, 40, 42, 44, 45, 46), um die Platte (30) vor einer Lichtquelle (18) in gewünschte Positionen zu bewegen, um das Ausmaß zu verändern, mit dem das Licht zerstreut wird, wobei die Lichtintensität nicht wesentlich verändert wird;
**dadurch gekennzeichnet**, daß die Platte (30) an verschiedenen Gebieten davon unterschiedliche Grade an Lichtzerstreuungsvermögen hat, wobei die Platte (30) einen geringen Grad an Lichtzerstreuungsvermögen an einem vorderen Bereich (70) davon, der ein erster Bereich der Platte (30) ist, um bei Bewegung in den Lichtpfad einzutreten, und einen höheren Grad an Lichtzerstreuungsvermögen an einem zugehörigen hinteren Teil (76) der Platte (30) und dazwischen Zwischengrade an Zerstreuungsvermögen hat.

2. Variabler Licht-Diffusor (28) nach Anspruch 1, bei dem die Zerstreuungsplatte (30) aus einer Anzahl von einzelnen Lichtzerstreuungsabschnitten (38) hergestellt ist, wobei einige dieser Abschnitte (38) dadurch hindurchtretendes Licht mit unterschiedlichen Zerstreuungsgraden zerstreuen.

3. Variabler Licht-Diffusor (28) nach Anspruch 1, außerdem mit einer zweiten Zerstreuungsplatte (32), die aus einem transparenten Material hergestellt ist und an verschiedenen Gebieten davon unterschiedliche Grade an Lichtzerstreuungsvermögen hat, wobei die zweite Platte (32) einen geringen Grad an Lichtzerstreuungsvermögen an einem vorderen Bereich (70) davon, der ein erster Bereich der zweiten Platte (32) ist, um bei Bewegung in den Lichtpfad einzutreten, und einen höheren Grad an Lichtzerstreuungsvermögen an einem zugehörigen hinteren Teil (76) der zweiten Platte (32) und dazwischen Zwischengrade an Zerstreuungsvermögen hat, wobei beide Zerstreuungsplatten (30, 32) vor dem Licht aufeinander zu bewegbar sind, wobei beide Platten (30, 32) dazu ausgestaltet sind, um sich zusammen in einer im wesentlichen überlappenden Weise in dem Pfad (48) des Lichts zu bewegen, so daß eine doppelte Lichtzerstreuung erreicht werden kann.

4. Variabler Licht-Diffusor (28) nach Anspruch 3, **dadurch gekennzeichnet**, daß sich in einem Lichtpfad Gebiete mit geringem Zerstreuungsvermögen von einer Platte (30, 32) mit Gebieten mit hohem Zerstreuungsvermögen der anderen Platte (30, 32) in Ausrichtung befinden, wenn die Platten (30, 32) in vollständig überlappende Positionen bewegt sind.

5. System, um in einem gewünschten Grad zerstreutes Licht zu erzeugen, mit:
einem Gehäuse (16), um darin eine Lichtquelle (18) unterzubringen, die einen Lichtstrahl erzeugt, der entlang einem Lichtpfad (48) ausgerichtet ist, wobei das Gehäuse (16) eine Öffnung hat, durch die der Lichtstrahl aus dem Gehäuse (16) austritt; und
einem Paar von Licht verändernden Platten (30, 32), die aus einem transparenten Material hergestellt sind, so daß die Intensität des dadurch hindurchtretenden Lichts nicht wesentlich vermindert wird, wobei die Platten (30, 32) für eine Bewegung von gegenüberliegenden Seitenpositionen in dem Gehäuse (16) in Richtung auf das Vorderteil des Gehäuses (16) in Zwischenpositionen in dem Lichtpfad (48) montiert sind, um dadurch das Licht in einem Ausmaß zu zerstreuen, mit dem die Platten in den Lichtpfad (48) bewegt werden;
**dadurch gekennzeichnet**, daß die Platten (30, 32) in vollständig überlappende Endpositionen bewegbar sind, wo das Licht durch eine Platte und dann durch die andere Platte (30, 32) hindurchtritt; und daß
jede der Platten einen geringen Grad an Lichtzerstreuungsvermögen an einem vorderen Bereich (70) davon, der ein erster Bereich der Platte (30, 32) ist, um bei Bewegung in den Lichtpfad (48) einzutreten, und einen höheren Grad an Lichtzerstreuungsvermögen an einem zugehörigen hinteren Teil (76) der Platte (30, 32) und dazwischen Zwischengrade an Zerstreuungsvermögen hat.

6. Licht-System nach Anspruch 5, bei dem jede Platte (30, 32) eine Anzahl von einzelnen Abschnitten (38) aufweist, die Kante an Kante aneinander befestigt sind, um zwischen den Seitenpositionen und den Endpositionen bewegbar zu sein, wobei einige dieser Abschnitte (38) das dadurch hindurchtretende Licht mit unterschiedlichen Zerstreuungsgraden zerstreuen.

7. Licht-System nach Anspruch 5, bei dem jeder Abschnitt (38) von jeder Platte (30, 32) das Licht in einem unterschiedlichen Ausmaß zerstreut wird und die Abschnitt (38) von jeder Platte (30, 32) so angeordnet sind, daß das durch beide Platten (30, 32) hindurchtretende Licht in einer gleichförmigen Weise zerstreut wird, wenn sie in überlappende Positionen bewegt sind.

8. Verfahren zum Zerstreuen von Licht, mit den Schritten:
übereinstimmendes Bewegen von einem Paar von transparenten Lichtzerstreuungsplatten (30, 32) zwischen jeweiligen Anfangspositionen außerhalb eines Lichtpfads (48) entlang eines Plattenpfades (34, 36) in jeweilige überlappende Endpositionen in dem Lichtpfad (48), um einen gewünschten Grad an Lichtzerstreuung zu erreichen, ohne daß die Intensität des Lichts wesentlich vermindert wird;
Bewegen von jeder Platte (30, 32) entlang des Plattenpfads (34, 36), so daß sich die vorderen Kanten von beiden Lichtzerstreuungsplatten (30, 32) in Richtung aufeinander zu bewegen und an gegenüberliegenden Seiten des Lichtstrahls beabstandet sind, um einen Zwischengrad an Lichtzerstreuung zu erreichen;
**gekennzeichnet durch** Bewegen von jeder Platte (30, 32) in sich zunehmend weiter überlappende Positionen in dem Strahl, um ein zunehmend größeres Ausmaß an Lichtzerstreuung zu erreichen, so daß eine doppelte Zerstreuung des Lichts erreicht wird; und daß
die Platten (30, 32) einen geringen Grad an Zerstreuungsvermögen an einer vorderen Kante (70) davon und einen hohen Grad an Zerstreuungsvermögen an einer hinteren Kante (76) davon haben.

9. Verfahren nach Anspruch 8, außerdem mit dem Schritt des Bewegens von jeder Platte (30, 32), wobei jede Platte (30, 32) eine Vielzahl einzelner Abschnitte (38) aufweist, die Kante an Kante aneinander befestigt sind, und wobei die Abschnitte von jeder Platte einen unterschiedlichen Grad an Lichtzerstreuung haben.

10. Variabler Licht-Diffusor (28), mit:
zumindest zwei Zerstreuungsplatten (30, 32), die aus einem transparenten Material hergestellt sind, so daß die Intensität des dadurch hindurchtretenden Lichts nicht wesentlich vermindert wird; und
einem Mechanismus (34, 36, 40, 42, 44, 45, 46), um beide Platten (30, 32) in Richtung aufeineinander zu in einer koordinierten Weise in irgendeine von einer Vielzahl von gewünschten Positionen vor einer Lichtquelle (18) zu bewegen, um das Ausmaß zu verändern, mit dem das Licht von der Lichtquelle (18) zerstreut wird, und zwar als eine Funktion eines Abstands zwischen einer vorderen Kante (70) von jeder Platte (30, 32);
**dadurch gekennzeichnet**, daß jede Platte (30, 32) aus einem Material hergestellt ist, das einen geringen Grad an Zerstreuungsvermögen an einer vorderen Kante (70) davon und einen hohen Grad an Zerstreuungsvermögen an einer hinteren Kante (76) davon hat; und daß
die Platten (30, 32) dazu ausgestaltet sind, um sich zusammen in im wesentlichen überlappender Weise in einem Pfad (48) des Lichts zu bewegen, so daß die doppelte Lichtzerstreuung erreicht werden kann.

## Revendications

1. Diffuseur de lumière variable (28) comprenant:
un panneau diffusant (30) construit en une matière transparente afin que l'intensité de la lumière qui le traverse ne soit pas sensiblement réduite; et
un mécanisme (34, 36, 40, 42, 45, 46) pour amener ledit panneau (30) à des positions souhaitées devant une source de lumière (18) pour modifier la quantité de lumière diffusée sans modifier sensiblement l'intensité de lumière;
caractérisé en ce que ledit panneau (30) a des degrés de diffusivité de lumière variant dans ses différentes zones, de sorte que ledit panneau (30) a un faible degré de diffusivité de lumière dans une partie avant (70) de celui-ci, qui est une première position du panneau (30) à entrer dans le chemin de lumière lorsqu'il est déplacé, et un fort degré de diffusivité de lumière dans une partie arrière (76) respective dudit panneau (30), et des degrés intermédiaires de diffusivité entre celles-ci.

2. Diffuseur (28) de lumière variable selon la revendication 1, dans lequel ledit panneau diffusant (30) est construit en un certain nombre de parties individuelles (38) diffusant la lumière, certaines desdites parties (38) diffusant la lumière qui les traverse avec des degrés de diffusion différents.

3. Diffuseur (28) de lumière variable selon la revendication 1, comprenant en outre un deuxième panneau diffusant (32) construit en une matière transparente et ayant des degrés de diffusivité de lumière variant dans ses différentes zones, de sorte que ledit deuxième panneau (32) a un faible degré de diffusivité de lumière dans une partie avant (70) de celui-ci, qui est une première partie du deuxième panneau (32) à entrer dans le chemin de lumière lorsqu'il est déplacé, et un fort degré de diffusivité de lumière dans une partie arrière (76) respective dudit deuxième panneau (32) et des degrés intermédiaires de diffusivité entre celles-ci, chacun desdits panneaux diffusants (30, 32) pouvant être déplacé vers l'autre devant la lumière, dans lequel chacun desdits panneaux (30, 32) est apte à se déplacer en même temps que l'autre en se recouvrant sensiblement dans le chemin (48) de ladite lumière, de sorte qu'une double diffusion de lumière peut être réalisée.

4. Diffuseur (28) de lumière variable selon la revendication 3, caractérisé en ce que, lorsque lesdits panneaux (30, 32) sont amenés dans des positions de recouvrement complet, des zones de faible diffusivité d'un panneau (30, 32) sont alignées dans un chemin de lumière avec des zones de forte diffusivité de l'autre panneau (30, 32).

5. Système destiné à produire de la lumière diffusée à un degré souhaité, comprenant :
un boîtier (16) où peut être monté une lampe (18), qui produit un faisceau lumineux dirigé le long d'un chemin de lumière (48), le dit boîtier (16) ayant une ouverture par laquelle le faisceau lumineux sort dudit boîtier (16); et
une paire de panneaux (30, 32) modifiant la lumière construits en une matière transparente, afin que l'intensité de la lumière qui les traverse ne soit pas sensiblement réduite, les dits panneaux (30, 32) étant montés pour être amenés à partir d'emplacements latéraux opposés dans ledit boîtier (16) vers la partie frontale dudit boîtier (16) à des positions intermédiaires dans ledit chemin de lumière (48) pour diffuser ainsi la lumière dans la mesure où lesdits panneaux sont déplacés dans ledit chemin de lumière (48);
caractérisé en ce que lesdits panneaux (30, 32) peuvent être amenés à des positions finales en recouvrement complet, où la lumière traverse l'un des panneaux, puis l'autre panneau (30, 32); et en ce que
chacun desdits panneaux a un faible degré de diffusivité de lumière dans une partie avant (70) de celui-ci, qui est une première partie du panneau (30, 32) à entrer dans le chemin de lumière (48) lorsqu'il est déplacé, et un fort degré de diffusivité de lumière dans une partie arrière (76) respective dudit panneau (30, 32), et des degrés intermédiaires de diffusivité entre celles-ci.

6. Système de lumière selon la revendication 5, dans lequel chacun desdits panneaux (30, 32) comprend un certain nombre de parties individuelles (38) montées ensemble bord à bord de manière à pouvoir être déplacées entre lesdites positions latérales et lesdites positions finales, dans lequel certaines desdites parties (38) diffusent la lumière qui les traverse avec des degrés de diffusion différents.

7. Système de lumière selon la revendication 5, dans lequel chacune desdites parties (38) de chacun desdits panneaux (30, 32) diffuse la lumière à un degré différent, et lesdites parties (38) de chaque panneau (30, 32) sont disposées de telle manière que, lorsqu'elles sont amenées à des positions en recouvrement, la lumière qui traverse lesdits deux panneaux (30, 32) est diffusée de manière uniforme.

8. Procédé de diffusion de lumière, comprenant les étapes consistant à :
amener de concert une paire de panneaux transparents diffusant la lumière (30, 32) entre des positions initiales respectives hors du chemin de lumière (48) le long d'un chemin de panneau (34, 36) à des positions finales respectives en recouvrement dans le chemin de lumière (48) pour réaliser un degré souhaité de diffusion de lumière sans réduire sensiblement l'intensité de la lumière;
déplacer chacun desdits panneaux (30, 32) le long dudit chemin de panneau (34, 36) de telle manière qu'un bord frontal de chacun desdits panneaux diffusant la lumière (30, 32) se déplace vers l'autre et soit écarté sur des côtés opposés du faisceau lumineux pour réaliser un degré souhaité de diffusion de lumière;
caractérisé en ce que chaque panneau (30, 32) est amené dans des positions se recouvrant progressivement davantage dans le faisceau pour réaliser un degré progressivement plus grand de diffusion de la lumière de manière à obtenir une double diffusion de lumière; et en ce que
lesdits panneaux (30, 32) ont un faible degré de diffusivité sur un bord avant (70) de celui-ci.

9. Procédé selon la revendication 8, comprenant en outre l'étape consistant à déplacer chacun desdits panneaux (30, 32), chaque panneau (30, 32) comprenant une pluralité de parties individuelles (38) montées ensemble bord à bord, les parties de chaque panneau ayant un degré différent de diffusion de ladite lumière.

10. Diffuseur de lumière variable (28) comprenant:
au moins deux panneaux diffusants (30, 32) construits en une matière transparente, afin que l'intensité de la lumière qui les traverse ne soit pas sensiblement réuite; et
un mécanisme (34, 36, 40, 42, 45, 46) pour amener chacun desdits panneaux (30, 32) l'un vers l'autre de manière coordonnée à l'une quelconque d'une pluralité de positions souhaitées devant une source de lumière (18) pour modifier la quantité de lumière diffusée par ladite source (18) en fonction d'un écartement entre le bord avant (70) de chacun desdits paneaux (30, 32);
caractérisé en ce que chacun desdits panneaux (30, 32) est construit en une matière produisant un faible degré de diffusivité sur un bord avant (70) de celui-ci, et produisant un fort degré de diffusivité sur un bord arrière (76) de celui-ci; et en ce que :
lesdits panneaux (30, 32) sont aptes à se déplacer également ensemble sensiblement à recouvrement dans un chemin (48) de ladite lumière de sorte qu'une double diffusion de lumière peut être réalisée.
